# FASCICULE DE BREVET EUROPEEN

(11) **EP 3 702 018 B1**
(45) Date de publication et mention de la délivrance du brevet: **05.04.2023**
(21) Numéro de dépôt: 20170376.6
(22) Date de dépôt: 29.12.2015
(51) Int. Cl.: B01D 65/10, C11D 3/386, B01D 65/02

(54) **TROUSSE D'INDENTIFICATION COMPORTANT DES PROTEASES**
BEUTEL ZUR INDENTIFIZIERUNG MIT PROTEASEN
POUCH FOR INDENTIFATION CONTAINING PROTEASES

(30) Priorité: 31.12.2014 BE 201405166; 31.03.2015 BE 201505200
(43) Date de publication de la demande: 02.09.2020
(62) Demande divisionnaire de: 15817896.2
(73) Titulaire: REALCO S.A., 1348 Louvain-la-Neuve (BE)
(72) Inventeur: BLACKMAN, Gordon, 1030 Schaerbeek (BE); FASTREZ, Sébastien, 7000 Mons (BE)
(74) Mandataire: Calysta NV

(56) Documents cités:
- EP-A1- 1 656 987
- WO-A1-2009/089587
- JP-A- H0 957 074
- US-A1- 2005 079 594
- YU C H ET AL: "Enzymatic treatment for controlling irreversible membrane fouling in cross-flow humic acid-fed ultrafiltration", JOURNAL OF HAZARDOUS MATERIALS, ELSEVIER, AMSTERDAM, NL, vol. 177, no. 1-3, 15 mai 2010 (2010-05-15), pages 1153-1158, XP026929074, ISSN: 0304-3894, DOI: 10.1016/J.JHAZMAT.2010.01.022 [extrait le 2010-01-13]

## Description

La présente invention se rapporte à un procédé de traitement d'une installation de filtration membranaire présentant au moins une entrée et au moins une sortie de fluide, ledit procédé comprenant une première étape a) d'amenée et de circulation dans ladite installation de filtration membranaire pendant une première période de temps prédéterminée d'une première solution enzymatique comprenant au moins une protéase, ladite première étape a) étant suivie par une première mesure, effectuée à ladite au moins une entrée et/ou à ladite au moins une sortie de fluide de ladite installation de filtration membranaire, d'au moins une première valeur d'un paramètre permettant de caractériser le fluide circulant dans ladite installation de filtration membranaire, cette au moins une première valeur mesurée d'un paramètre étant comparée à une valeur mesurée de ce même paramètre préalablement à l'étape a).

Un tel procédé de traitement d'une installation de filtration membranaire est connu de la publication de Yu et al. (Enzymatic treatment for controlling irréversible membrane fouling in cross-flow humic acid-fed ultrafiltration. Journal of Hazardous Materials 2010, 177: 1153-1158).

La filtration est un procédé de séparation permettant de séparer les constituants d'un mélange qui présente une phase liquide et une phase solide au travers d'un milieu poreux. L'utilisation d'un filtre ou d'une membrane permet de retenir les particules du mélange hétérogène qui sont plus grosses que les ouvertures du filtre (porosité). Le liquide ayant subi la filtration est nommé filtrat ou perméat, tandis que la fraction retenue par le filtre est nommé résidu, rétentat ou gâteau. Une filtration sur membrane (filtration membranaire) est donc un procédé de séparation physique se déroulant en phase liquide au travers d'une membrane, le but étant de purifier, de fractionner ou de concentrer des espèces en suspension dans un solvant.

A titre d'exemple, dans le domaine de l'industrie laitière, la filtration membranaire est utilisée pour la fabrication de produits dérivés du lait comme le lait en poudre, les yaourts, les fromages et les laits standardisés (écrémés, demi-écrémés, entiers, ...).

Malheureusement, les installations de filtration membranaire souffrent de problèmes de colmatages fréquents, des particules de différentes natures issues du mélange hétérogène se fixant dans et sur les pores des membranes et finissant par être responsables d'une saturation de ces dernières. De tels colmatages ont un impact direct sur la chaîne de production d'une industrie, par exemple d'une industrie laitière, puisqu'il faut procéder ponctuellement à l'arrêt de la chaîne de production, vider les installations de filtration membranaire et enfin procéder au nettoyage de ces dernières afin de déboucher les pores des membranes.

Actuellement, ce débouchage des pores des membranes repose notamment sur l'injection de solutions enzymatiques dans les installations de filtration membranaire pour en décrocher les particules responsables des colmatages. Typiquement, un cocktail enzymatique comprenant toute une série d'enzymes est injecté puis est amené à circuler dans les installations afin de procéder à un décrochage des gâteaux colmatant les filtres. Toutefois, cette technique présente plusieurs inconvénients dont le principal est l'injection d'un cocktail enzymatique comprenant différentes enzymes, lesquelles ne sont pas forcément adéquates pour déloger les particules responsables d'un colmatage donné. En effet, d'une installation à l'autre et selon le mélange hétérogène traité (filtré), les gâteaux se formant au niveau des membranes diffèrent et il est dès lors peu probable qu'un cocktail enzymatique donné, efficace pour une installation particulière soit également efficace pour une autre installation. En pratique, de nos jours, d'importants volumes de solutions enzymatiques sont donc injectés pour traiter globalement les colmatages sans connaitre véritablement la nature de ces derniers. Cette façon de procéder est coûteuse, peu écologique et est loin d'être optimale. En effet, certaines enzymes injectées dans le système n'y agiront pas dès lors que le colmatage peut être constitué de particules pour lesquelles ces enzymes peuvent ne présenter aucune affinité : elles ne permettront donc pas de déloger ces particules responsables de colmatages avec lesquelles elles sont incapables d'interagir.

Une autre approche, comme par exemple celle divulguée dans le document WO 2009/089587, repose sur une extraction hors des installations de filtration des filtres souffrant de colmatages avant de les soumettre à un trempage sous agitation dans des cuves contenant des solutions enzymatiques pour décolmater les filtres. Ceci est particulièrement contraignant puisqu'il faut au moins démonter l'installation de filtration en partie. Le document JP H09 57074 A présente un autre procédé de nettoyage enzymatique.

L'invention a pour but de pallier ces inconvénients en procurant un procédé de traitement d'une installation de filtration membranaire afin d'éviter toute injection d'enzymes non utiles et d'assurer un décrochage ciblé des particules responsables de la formation de gâteau sur les membranes, ceci sans avoir à extraire les filtres des installations de filtration. Ceci a pour but de réduire les volumes de solutions enzymatiques utilisés et d'éviter toute injection d'enzymes inutiles dans les installations de filtration. Par ailleurs, comme indiqué ci-dessus, l'invention a pour objectif de permettre de procéder à un traitement en place des filtres, c'est-à-dire sans avoir à extraire ces derniers de l'installation de filtration.

La présente invention décrit une trousse d'identification de la nature de colmatages présents dans une installation de filtration membranaire selon les revendications 1-5. Il est prévu un procédé tel qu'indiqué au début caractérisé en ce qu'il comprend, pour une identification de la nature de colmatages présents dans ladite installation de filtration membranaire, une seconde étape b) d'amenée et de circulation dans ladite installation de filtration membranaire pendant une deuxième période de temps prédéterminée d'une deuxième solution enzymatique comprenant au moins une enzyme autre qu'une protéase, ladite seconde étape b) étant suivie par une seconde mesure, effectuée à ladite au moins une entrée et/ou à ladite au moins une sortie de fluide de ladite installation de filtration membranaire, d'au moins une seconde valeur d'un paramètre permettant de caractériser le fluide circulant dans ladite installation de filtration membranaire, cette au moins une seconde valeur mesurée d'un paramètre étant comparée à une valeur mesurée de ce même paramètre préalablement à l'étape b), lesdites étapes a) et b) étant mises en oeuvre dans un ordre quelconque.

Suivant le procédé, ladite valeur d'un paramètre mesurée à ladite au moins une entrée et/ou à ladite au moins une sortie de fluide de ladite installation de filtration membranaire est une valeur d'un paramètre permettant de caractériser la dynamique du fluide y circulant (par exemple le débit du fluide ou la pression transmembranaire) ou une valeur d'un paramètre permettant de caractériser les substances en suspension dans le fluide (par exemple le contenu en particules protéiques dans le fluide). Il est bien entendu que tout autre paramètre permettant de caractériser la dynamique ou le contenu particulaire du fluide circulant dans l'installation de filtration membranaire convient dans le cadre de la présente invention. Par exemple, des pressions en entrée et en sortie de l'installation ou encore des mesures ATP-métriques réalisées sur le fluide en sortie et/ou en entrée de l'installation de filtration membranaire pourraient convenir dans le cadre de la présente invention.

La valeur mesurée d'un paramètre est comparée à une valeur mesurée de ce même paramètre préalablement à chacune des étapes a) et b) afin de déterminer dans quelle mesure les amenées et les circulations des premières et deuxième solutions enzymatiques ont un impact sur ce paramètre et donc sur les caractéristiques du fluide circulant dans ladite installation de filtration membranaire. Selon que la valeur mesurée diffère ou non de la valeur mesurée préalablement à chacune des étapes a) et b), la nature du colmatage peut être identifiée : si une amenée et une circulation d'une solution enzymatique donnée comprenant une enzyme donnée permet de constater une différence entre les valeurs mesurées avant (valeur de référence) et après les étapes d'amenée et de circulation de chacune des solutions enzymatiques, ceci permet de conclure que le colmatage de la membrane de l'installation de filtration membranaire est au moins dû à la présence de particules avec lesquelles l'enzyme donnée d'une solution enzymatique présente une certaine affinité. Il est prévu que d'autres étapes complémentaires (a', a", ... b', b", ...) d'amenée et de circulation d'autres solutions enzymatiques puissent compléter les amenées des première et deuxième solutions enzymatiques, des mesures d'au moins une valeur d'un paramètre permettant de caractériser le fluide circulant dans ladite installation de filtration membranaire étant alors effectuées avant et après les amenées et les circulations de chacune de ces solutions enzymatiques complémentaires (a', a", ... b', b", ...). Par exemple, selon l'invention, une amenée et une circulation d'une solution enzymatique comprenant une enzyme autre qu'une protéase ou autre que l'enzyme amenée lors de la seconde étape b) pourrait être réalisée entre les étapes a) et b), avant l'étape a) ou encore après l'étape b). Dans ce cas, de façon avantageuse, la valeur de pH de la solution enzymatique complémentaire sera sensiblement identique aux valeurs de pH des solutions enzymatiques des étapes a) et b), ceci afin d'assurer une activité enzymatique optimale des enzymes, laquelle activité dépend essentiellement du pH du milieu environnant. Ces étapes complémentaires (a', a", ... b', b", ...) peuvent être réalisées successivement de telle façon à mettre en oeuvre toute une série d'enzymes, ce qui permet d'affiner l'identification de la nature des colmatages.

Un tel procédé permet d'identifier précisément la nature des colmatages à traiter et plus particulièrement si les colmatages sont au moins de type protéiques et/ou liés à la nature de l'enzyme amenée lors de la seconde étape b). En effet, les amenées des différentes solutions enzymatiques, en parallèle avec une mesure d'au moins une valeur d'un paramètre effectuée à au moins une entrée et/ou à au moins une sortie de fluide de l'installation de filtration membranaire avant et après chacune de ces amenées et de ces circulations des différentes solutions enzymatiques, permet de déterminer la nature des colmatages. Comme indiqué ci-dessus, les valeurs mesurées permettent de caractériser le fluide circulant dans l'installation de filtration suite aux amenées et aux circulations des différentes solutions enzymatiques. Une augmentation ou une diminution de ces valeurs mesurées de paramètre permettent d'établir dans quelle mesure chacune des solutions enzymatiques injectées dans le système a un impact sur le décrochage des gâteaux colmatant les membranes.

Par exemple, si la valeur mesurée est le débit en sortie de l'installation de filtration et que cette valeur est augmentée suite à l'injection et à la circulation d'une solution enzymatique par rapport à une valeur mesurée de ce même paramètre avant l'amenée de cette solution enzymatique, ceci indique que cette solution enzymatique a un impact sur le décrochage des particules responsables du colmatage. En d'autres termes, dans un tel cas de figure, ceci indique que l'enzyme présente dans la solution enzymatique injectée a une affinité pour les particules colmatant les membranes, cette enzyme décrochant ces particules qui ne colmatent plus ou du moins plus que dans une moindre mesure la membrane. Par conséquent, un meilleur écoulement de la solution enzymatique a lieu et une mesure d'une valeur de débit en sortie plus élevée est observée.

A l'inverse, si les valeurs mesurées d'un même paramètre avant et après injection d'une solution enzymatique donnée dans l'installation de filtration membranaire ne varie pas, ceci indique que la solution enzymatique en question et donc que l'enzyme en question n'a pas d'impact sur le décrochage des particules responsables du colmatage des membranes et que le colmatage n'est donc pas lié à des particules avec lesquelles l'enzyme est connue comme ayant une affinité.

Comme indiqué ci-dessus, en procédant à des amenées distinctes de solutions enzymatiques distinctes et en associant des mesures de valeurs de paramètres pour caractériser le fluide circulant dans les installations de filtration membranaires suite à ces amenées distinctes de solutions enzymatiques différentes, le procédé selon l'invention permet de déterminer précisément quels types de particules sont présentes sur les membranes et sont responsables du colmatage de ces dernières. Il s'en suit, qu'en aval du procédé selon l'invention ayant permis de déterminer la nature des colmatages, des formulations enzymatiques adéquates et ciblant précisément les particules colmatant les membranes peuvent être préparées avant d'être injectées dans un type d'installation. Ne seront donc injectées dans le système que les enzymes nécessaires sans « polluer » les circuits des installations avec des enzymes qui n'y auraient aucun intérêt dès lors qu'elles ne présenteraient aucune affinité avec les particules à décrocher des membranes. Ceci constitue une économie considérable en termes d'utilisation de consommables et permet de réduire les coûts liés au nettoyage des membranes. En outre, ceci permet de déterminer des enzymes efficaces qui n'étaient à priori pas envisagées pour procéder au nettoyage et/ou au débouchage des membranes au sein de certaines installations utilisant par défaut d'autres enzymes n'étant pas forcément adéquates.

Selon un mode de réalisation du procédé suivant l'invention, ladite première et ladite deuxième solution enzymatique présentent un pH compris entre 6 et 8, préférentiellement compris entre 6,5 et 7,5. De telles valeurs de pH assurent une efficacité suffisante des enzymes telles que par exemple les protéases et les lipases de telle sorte qu'elles présentent une activité enzymatique suffisante leur permettant d'interagir et de décrocher des particules protéiques et/ou lipidiques colmatant la membrane.

Avantageusement, selon le procédé suivant l'invention, ladite seconde étape b) d'amenée et de circulation d'une deuxième solution enzymatique comprenant au moins une enzyme autre qu'une protéase, repose sur une amenée et une circulation d'au moins une enzyme choisie dans le groupe constitué des α-polysaccharidases (lactase, amylase, alpha-glucosidase, ...), des β-polysaccharidases (β-N-acétylglucosaminidase, cellulase, hémi-cellulase, β-glucanase, arabanase, pectinase, chitinase, xylanase, dextranase, lysozyme, pullulanase, β-glucisidase, mannanase, ...) , des oxydo-réductases (laccase, ...), des lyases (pectate lyase , ...), des transférases, des lipases et des estérases (lysophospholipase, phospholipase, ...) et de leurs mélanges.

De préférence, le procédé suivant l'invention comprend en outre au moins une étape additionnelle c) d'une amenée et d'une circulation dans ladite installation de filtration membranaire pendant une troisième période de temps prédéterminée d'une troisième solution enzymatique comprenant au moins une enzyme, choisie dans le groupe constitué des α-polysaccharidases (lactase, amylase, alpha-glucosidase, ...), des β-polysaccharidases (β-N-acétylglucosaminidase, cellulase, hémi-cellulase, β-glucanase, arabanase, pectinase, chitinase, xylanase, dextranase, lysozyme, pullulanase, β-glucisidase, mannanase, ...) , des oxydo-réductases (laccase, ...), des lyases (pectate lyase , ...), des transférases, des protéases et des peptidases (métallo-protéase, sérine-protéases, exo-peptidase, endo-protéase, cystine-protéase, ...), des lipases et des estérases (lysophospholipase, phospholipase, ...) et de leurs mélanges, une mesure additionnelle d'au moins une valeur d'un paramètre, permettant de caractériser le fluide circulant dans ladite installation de filtration membranaire, pouvant alors être effectuée à ladite au moins une entrée et/ou à ladite au moins une sortie de fluide de ladite installation de filtration membranaire suite à cette étape additionnelle c), cette au moins une valeur mesurée d'un paramètre étant comparée à une valeur mesurée de ce même paramètre préalablement à cette étape additionnelle c).

Si les protéases et par exemple les lipases (si, à titre d'exemple, au moins une lipase est amenée lors de l'étape b)) permettent d'identifier la présence de particules protéiques et lipidiques colmatant la membrane (ces deux types de particules étant fréquemment responsables de colmatages), il est prévu, suivant l'invention, d'utiliser au moins une autre enzyme additionnelle afin de déterminer si les colmatages ne sont pas dus à la présence conjointe ou non de particules d'autres types comme par exemple des particules de type lactosique dans le cas de l'industrie du lait.

Selon l'invention, ladite troisième solution enzymatique présente un pH compris entre 5 et 8, de préférence compris entre 6 et 7,5, préférentiellement compris entre 6,5 et 7, ces plages de pH permettant aux enzymes choisies dans le groupe constitué des α-polysaccharidases (lactase, amylase, alpha-glucosidase, ...), des β-polysaccharidases (β-N-acétylglucosaminidase, cellulase, hémi-cellulase, β-glucanase, arabanase, pectinase, chitinase, xylanase, dextranase, lysozyme, pullulanase, β-glucisidase, mannanase, ...) , des oxydo-réductases (laccase, ...), des lyases (pectate lyase , ...), des transférases, des protéases et des peptidases (métallo-protéase, sérine-protéases, exo-peptidase, endo-protéase, cystine-protéase, ...), des lipases et des estérases (lysophospholipase, phospholipase, ...) et de leurs mélanges, de présenter une activité enzymatique optimale.

De façon préférée, suivant la présente invention, ladite troisième solution enzymatique comprenant au moins une enzyme, choisie dans le groupe mentionné ci-dessus, est amenée et injectée dans une installation de filtration membranaire au sein de laquelle règne un pH compris entre 5 et 8, plus particulièrement compris entre 6,5 et 7,5. Dès lors, de préférence, si d'autres solutions enzymatiques ou d'un autre type (solution détergente, ...) sont injectées dans l'installation de filtration et que ces solutions présentent une valeur de pH supérieure ou inférieure à une valeur de pH comprise entre 5 et 8, l'injection de ladite troisième solution enzymatique sera avantageusement réalisée en amont de ces injections de solutions présentant un pH supérieur ou inférieur. En procédant de la sorte, une activité enzymatique optimale des enzymes présentes dans la troisième solution enzymatique est garantie, ces enzymes présentant une activité enzymatique optimale pour des valeurs de pH comprises dans une plage de pH allant de 5 à 8, préférentiellement de 6,5 à 7,5.

Dans le cadre de la présente invention, il est également prévu que plusieurs étapes additionnelles (c', c", ...) puissent être réalisées successivement de telle façon à mettre en oeuvre toute une série d'enzymes, ce qui permet d'affiner l'identification de la nature des colmatages.

Dans le cadre de la présente invention, les termes une première, une deuxième et une troisième sont utilisés pour permettre de distinguer les différentes étapes mais n'imposent pas forcément d'ordre séquentiel de ces mêmes étapes.

Avantageusement, le procédé selon l'invention comprend en outre une étape initiale d) d'une amenée et d'une circulation dans ladite installation de filtration membranaire pendant une quatrième période de temps prédéterminée d'une solution détergente comprenant au moins un agent séquestrant et/ou au moins un agent dispersant et/ou au moins un agent mouillant. L'amenée et la circulation d'une telle solution permet le décrochage de souillures facilement extractibles pour permettre aux enzymes des solutions enzymatiques d'atteindre plus facilement les particules avec lesquelles elles présentent une affinité au niveau des membranes. Dès lors qu'il s'agit d'une étape initiale réalisée en amont des amenées et des circulations des solutions enzymatiques, de préférence, ladite solution détergente présente un pH compris entre 5 et 8, préférentiellement compris entre 6,5 et 7,5. De cette façon, suite à la circulation de la solution détergente dans l'installation de filtration, un pH compris entre 5 et 8 y règne, ce qui permet d'y injecter des solutions enzymatiques comprenant des enzymes dont l'activité enzymatique est optimale à des valeurs de pH comprise entre 5 et 8, plus particulièrement compris entre 6,5 et 7,5. Bien entendu, s'il n'est pas envisagé d'injecter de telles solution enzymatiques requérant un pH compris entre 5 et 8, la solution détergente initiale peut présenter un pH acide ou basique dont la valeur est comprise en-dehors de la plage de pH allant de 5 à 8.

De préférence, le procédé selon l'invention comprend en outre au moins une étape de réalisation d'un saut de pH réalisée pour atteindre un pH compris entre 9 et 10 par ajout d'un composé alcalin dans ladite installation de filtration membranaire, ledit saut de pH étant réalisé :
- avant les étapes a) et/ou b), ou
- après les étapes a) et/ou b), ou
- après les étapes d) et/ou c), les étapes d) et/ou c), a) et/ou b) étant alors opérées de façon séquentielle.
La réalisation d'un tel saut de pH permet de potentialiser l'activité d'enzymes requérant un pH de l'ordre de 9 à 10 pour présenter une activité enzymatique optimale, comme c'est notamment le cas pour les protéases et les lipases. Ceci est avantageux dans une optique de réduire les quantités de consommables employés, plus les enzymes étant efficaces, moins les volumes injectés devant être importants.

Selon l'invention, un saut de pH peut être réalisé avant ou après l'étape a), avant ou après l'étape b), avant ou après les étapes a) et b) réalisées dans un ordre quelconque, voire avant ou après les étapes a) et b) complétées par des étapes éventuelles (a', a", ... et/ou b', b", ...) utilisant d'autres enzymes.

Dans un autre cas de figure, lorsqu'entrent en jeu d'autres solutions enzymatiques comprenant des enzymes telles que celles utilisées lors d'au moins une étape additionnelle c) mentionnée plus haut et dès lors que ces enzymes ont une activité enzymatique optimale à des pH compris entre 6 et 8, le saut de pH sera effectué après les amenées de ces solutions enzymatiques additionnelles (étape c et éventuellement c', c", ...).

Avantageusement, le procédé selon l'invention comprend en outre une étape additionnelle finale de montée de pH réalisée pour atteindre un pH compris entre 10 et 11 par ajout d'un composé alcalin dans ladite installation de filtration membranaire. Cette étape finale a pour objet de solubiliser les souillures (particules, ...) qui seraient restées en suspension suite à la réalisation des étapes précédentes du procédé selon l'invention. Puisque cette étape est réalisée à la fin du procédé, une telle valeur de pH comprise entre 10 et 11 n'affecte pas l'activité enzymatique des solutions enzymatiques, lesquelles auront agi en amont de cette montée finale de pH.

De préférence, selon le procédé suivant l'invention, lesdites première, deuxième, troisième et quatrième période de temps prédéterminées ont une durée comprise entre 5 et 60 minutes, de préférence entre 20 et 30 minutes. De telles durées de circulation des solutions enzymatiques ont été déterminées comme étant adéquates afin que les mesures de paramètres réalisées soient représentatives de l'activité ou non des enzymes sur les particules responsables du colmatage des membranes.

De préférence, selon le procédé suivant l'invention, au moins ladite étape a) est réalisée à une température comprise entre 20 et 60°C, de préférence entre 40 et 50°C. Dans le cadre de la présente invention, il a été déterminé que ces plages de températures sont adéquates pour chacune des étapes afin que les mesures de paramètres réalisées soient représentatives de l'activité ou non des enzymes sur les particules responsables du colmatage des membranes.

Avantageusement, selon le procédé suivant l'invention, lesdites solutions enzymatiques comprennent une phase détergente comme solvant. Bien que les solutions enzymatiques puissent être formulées en solution aqueuse selon l'invention, les enzymes peuvent avantageusement être formulées dans une phase détergente adéquate ne minimisant pas leur activité enzymatique mais contribuant au décrochage et à la mise en suspension des particules responsables des colmatages.

De préférence, le procédé selon l'invention comprend en outre une étape d'identification additionnelle de la présence de biofilms mise en oeuvre par amenée et circulation dans ladite installation de filtration membranaire d'une composition comprenant au moins un composant détergent et au moins un composant enzymatique, ledit composant enzymatique comprenant au moins une laccase et/ou au moins une polysaccharidase et/ou au moins une protéase et ledit composant détergent comprenant au moins un composé séquestrant, un composé dispersant et un composé mouillant. Une telle identification de la présence de biofilms permet, si du biofilm est détecté, d'optimiser le débouchage des membranes en procédant à une élimination des biofilms, par exemple en amenant et en faisant circuler une composition d'élimination des biofilms telle que celle décrite dans le document EP2243821.

De préférence, le procédé selon l'invention comprend en outre une étape d'identification additionnelle de la présence d'ions métalliques mise en oeuvre par amenée et circulation d'une composition comprenant un agent séquestrant et/ou un agent dispersant.

Le séquestrant est une substance chimique ayant la capacité à former des complexes avec des ions minéraux qu'il fixe sous une forme empêchant leur précipitation par les réactions habituelles. A titre d'exemple, le séquestrant peut être l'acide éthylène-diamine-tétraacétique, le glucono-delta-lactone, le gluconate de sodium, le gluconate de potassium, le gluconate de calcium, l'acide citrique, l'acide phosphorique, l'acide tartrique, l'acétate de sodium, le sorbitol, un composé comportant un atome de phosphore. Le séquestrant peut également être un oxyde de phosphore tel que phosphonate, phosphinate ou phosphate, ou un sel de celui-ci, une amine ou un oxyde d'amine portant au moins, dans sa structure, un groupement fonctionnel phosphine, oxyde de phosphine, phophinite, phosphonite, phosphite, phosphonate, phosphinate ou phosphate, ou un sel de ceux-ci. Le séquestrant peut encore être un phosphonate ou un sel de celui-ci, une amine ou un oxyde d'amine comportant au moins, dans sa structure, un groupement fonctionnel phosphine, oxyde de phosphine, phosphinite, phosphonite, phosphite, phosphonate, phosphinate ou phosphate, ou un sel de ceux-ci. A titre d'exemple non limitatif, le phosphonate peut être de formule générale R1 (R2O)(R3O)P=O dans lequel R1, R2 et R3 sont indépendamment sélectionnés parmi le groupe hydrogène, alkyle, alkyle substitué, alkyle-amino substitué ou non, aminoalkyl substitué ou non, aryle ou aryle substitué. A titre d'exemple non limitatif, l'amine ou l'oxyde d'amine peuvent comporter un, deux ou trois substituant(s) de formule générale CR4R5W dans laquelle R4 et R5 sont indépendamment sélectionnés parmi le groupe hydrogène, alkyle, alkyle substitué, alkyle-amino substitué ou non, aminoalkyl substitué ou non, aryle ou aryle substitué, et W est sélectionné parmi le groupe phosphonate, phosphinate ou phosphate. Le séquestrant peut être sous la forme d'un sel de sodium, calcium, lithium, magnésium ou potassium ; préférentiellement, le séquestrant peut être sous la forme d'un sel de sodium, calcium, ou potassium. Le dispersant est une substance chimique ayant la capacité à améliorer la séparation des particules d'une suspension afin de prévenir l'agglutination, l'agrégation et/ou la décantation. Le séquestrant peut encore être du MGDA (méthylglycinediacétique acide) et ses dérivés, du NTA (nitrilotriacétique acide) et ses dérivés, du DTPA (diéthylènetriaminopentaacétique acide) et ses dérivés, du HEDTA (hydroxyéthylènediaminetriacétique acide) et ses dérivés ou encore du GLDA (glutamique acide / diacétique acide) et ses dérivés.

Le dispersant peut être un polymère soluble ou partiellement soluble dans l'eau tel que par exemple le polyéthylène glycol, les dérivés de la cellulose ou un polymère comprenant au moins un motif acide acrylique ou ester acrylique. Le dispersant peut être un polymère comprenant au moins un motif acide acrylique ou ester acrylique de formule générale - (CH2-CH-COOR)- dans lequel R peut être un hydrogène, un alkyle ou un alkyle substitué, un aryle ou un aryle substitué. En particulier le dispersant est un polymère ayant une masse moléculaire Mw comprise entre 500 et 10000. Le dispersant peut encore être est un homopolymère de l'acide acrylique. En particulier, le dispersant peut être un homopolymère de l'acide acrylique ayant une masse moléculaire comprise entre 2000 et 6000.

D'autres formes de réalisation du procédé suivant l'invention sont indiquées dans les revendications annexées.

La présente invention porte également sur une trousse d'identification de la nature de colmatages présents dans une installation de filtration membranaire, ladite trousse comprenant au moins :
a) une première solution enzymatique comprenant au moins une protéase;
b) une deuxième solution enzymatique comprenant au moins une enzyme autre qu'une protéase.

De préférence, selon l'invention, la deuxième solution enzymatique de la trousse d'identification de la nature de colmatages présents dans une installation de filtration membranaire comprend au moins une enzyme choisie dans le groupe constitué des α-polysaccharidases (lactase, amylase, alpha-glucosidase, ...), des β-polysaccharidases (β-N-acétylglucosaminidase, cellulase, hémi-cellulase, β-glucanase, arabanase, pectinase, chitinase, xylanase, dextranase, lysozyme, pullulanase, β-glucisidase, mannanase, ...) , des oxydo-réductases (laccase, ...), des lyases (pectate lyase , ...), des transférases, des lipases et des estérases (lysophospholipase, phospholipase, ...) et de leurs mélanges.

De préférence, la trousse selon l'invention comprend en outre une troisième solution enzymatique comprenant au moins une enzyme choisie dans le groupe constitué des α-polysaccharidases (lactase, amylase, alpha-glucosidase, ...), des β-polysaccharidases (β-N-acétylglucosaminidase, cellulase, hémi-cellulase, β-glucanase, arabanase, pectinase, chitinase, xylanase, dextranase, lysozyme, pullulanase, β-glucisidase, mannanase, ...) , des oxydo-réductases (laccase, ...), des lyases (pectate lyase , ...), des transférases, des protéases et des peptidases (métallo-protéase, sérine-protéases, exo-peptidase, endo-protéase, cystine-protéase, ...), des lipases et des estérases (lysophospholipase, phospholipase, ...) et de leurs mélanges.

Avantageusement, la trousse selon l'invention comprend en outre une solution détergente comprenant au moins un agent séquestrant et/ou au moins un agent dispersant et/ou au moins un agent mouillant.

De préférence, la trousse selon l'invention comprend en outre une composition comprenant au moins un composant détergent et au moins un composant enzymatique, ledit composant enzymatique comprenant au moins une laccase et/ou au moins une polysaccharidase et/ou au moins une protéase et ledit composant détergent comprenant au moins un composé séquestrant, un composé dispersant et un composé mouillant.

Avantageusement, la trousse selon l'invention comprend en outre une composition comprenant un agent séquestrant et/ou un agent dispersant.

D'autres formes de réalisation de la trousse suivant l'invention sont indiquées dans les revendications annexées.

### Exemples

### Exemple 1

Afin de déterminer la nature de colmatages présents dans une installation d'ultrafiltration (volume de 300L) d'extraction de lupines, le procédé suivant l'invention a été mis en oeuvre selon les étapes reprises dans le tableau ci-dessous :

| **Etape** | **Durée (min)** | **Produit injecté** | **Volume (L)** | **T° (°C)** | **pH après injection du produit** | **Débit en sortie (L/h)** |
|---|---|---|---|---|---|---|
| **Colmatages organiques** | | | | | | |
| Base | 20 | A6 + D2 | 0,5 (A6) | 47,6 | 5,5 | 280 |
| détergente + acidification | | | + 0,15 (D2) | | | |
| Cellulase | 20 | K4 | 0,15 | 47,5 | 5,1 | 426 |
| Saut de pH | 10 | K2 | 0,2 | 47,5 | 9,8 | 356 |
| Protéase | 20 | K1 | 0,8 | 48 | 9,8 | 518 |
| Lipase | 20 | K3 | 0,15 | 48,5 | 9,8 | 521 |
| Rinçage | 10 | H₂O | n.a.* | 48,5 | 7 | 521 |

| **Colmatages métalliques** | | | | | | |
|---|---|---|---|---|---|---|
| Acidification | 15 | A3 | 0,25 | 41 | 3 | 760 |
| Séquestrant + dispersant | 20 | A4 | 0,3 | 42 | 3 | 917 |

| | | | | | | |
|---|---|---|---|---|---|---|
| A6 = base détergente comprenant un agent séquestrant, un agent dispersant et un agent mouillant D2 = solution acide (acide phosphorique + acide nitrique) K4 = solution enzymatique aqueuse à base de cellulase K2 = solution alcaline (soude caustique + potasse caustique) K1 = solution enzymatique aqueuse à base de protéase K3 = solution enzymatique aqueuse à base de lipase A3 = solution acide (HCl) A4 = solution comprenant un agent séquestrant et un agent dispersant n.a.* = non applicable : circulation à flux perdu en continu durant 10 min | | | | | | |

La mise en oeuvre du procédé suivant l'invention selon ce premier exemple a permis de mettre en évidence que les colmatages de l'installation d'ultrafiltration sont essentiellement dus à la présence de particules présentant une affinité avec les cellulases et les protéases mais aussi à cause de la présence d'ions métalliques. Comme on peut le constater de cet exemple, une première étape d'injection d'une solution détergente a été réalisée, ceci pour décrocher au moins partiellement les particules (souillures) du filtre et les maintenir en suspension. Une valeur de pH de 5,5 a été imposée en début d'audit afin que la cellulase se retrouve dans un milieu présentant un pH favorable à son activité enzymatique. En outre, un saut de pH a été réalisé avant les injections successives des solutions enzymatiques à base de protéase et de lipase afin que ces enzymes se retrouvent dans un milieu présentant un pH favorable à leur activité enzymatique. Par ailleurs, une acidification a été effectuée avant l'injection d'une solution comprenant un agent séquestrant et un agent dispersant, ceci afin de favoriser l'action de ces agents dans le décrochage d'éventuels ions métalliques. Plus spécifiquement, l'acidification a été réalisée pour effectuer un décrochage du fer.

De cet essai, dès lors que des valeurs de débit plus élevées en sortie d'installation de filtration ont été observés à la suite de l'injection de la solution contenant de la cellulase, de l'injection de la solution contenant de la protéase et de l'injection de la solution comprenant un agent séquestrant et un agent dispersant, il a pu être conclu que la nature des colmatages est essentiellement cellulosique et protéique mais que le colmatage est également dû à la présence d'ions métallique. Suite à cet audit, une solution adéquate comprenant des cellulases, des protéases et des agents permettant de décrocher les ions métalliques a pu être formulée pour pouvoir agir spécifiquement contre les particules réellement responsables du colmatage.

### Exemple 2

Afin de déterminer la nature de colmatages présents dans une installation de nanofiltration et de filtration par osmose inverse (volume de 1500L) de traitement de lait, le procédé suivant l'invention a été mis en oeuvre selon les étapes reprises dans le tableau ci-dessous :

| **Etape** | **Durée (min)** | **Produit injecté** | **Volume (L)** | **T° (°C)** | **pH après injection du produit** | **Débit en sortie (L/h)** |
|---|---|---|---|---|---|---|
| **Colmatages organiques** | | | | | | |
| Base détergente | 20 | A6 | 3 | 45 | 7,57 | 6000 |
| Lactase | 20 | R1 | 0,9 | 30 | 7,57 | 6000 |
| Protéase | 20 | R2 | 0,9 | 35 | 7,01 | 7000 |
| Lipase | 20 | R3 | 0,9 | 37,2 | 6,87 | 6500 |
| Saut de pH | 10 | K2 | 3 | 40,2 | 11,05 | 9000 |
| Rinçage | 10 | H₂O | n.a.* | 45 | 7 | 6500 |

| **Colmatages métalliques** | | | | | | |
|---|---|---|---|---|---|---|
| Séquestrant + dispersant + K2 | 25 | A4 | 4,5 | 34 | 10,76 | 9000 |

| | | | | | | |
|---|---|---|---|---|---|---|
| A6 = base détergente comprenant un agent séquestrant, un agent dispersant et un agent mouillant R1 = solution enzymatique aqueuse à base de lactase K2 = solution alcaline (soude caustique + potasse caustique selon un ratio 1:1) R2 = solution enzymatique aqueuse à base de protéase R3 = solution enzymatique aqueuse à base de lipase A4 = solution comprenant un agent séquestrant et un agent dispersant n.a.* = non applicable : circulation à flux perdu en continu durant 10 min | | | | | | |

La mise en oeuvre du procédé suivant l'invention selon ce second exemple a permis de mettre en évidence que les colmatages de installation de nanofiltration et de filtration par osmose inverse sont essentiellement dus à la présence de particules présentant une affinité avec les lipases et les protéases . Comme on peut le constater de cet exemple, une première étape d'injection d'une solution détergente a été réalisée, ceci pour décrocher au moins partiellement les particules du filtre et les maintenir en suspension. En outre, un saut de pH a été réalisé suite aux injections successives des solutions enzymatiques à base de protéase et de lipase afin que ces enzymes se retrouvent chacune dans un milieu présentant un pH favorable à leur activité enzymatique.

De cet essai, dès lors que des valeurs de débit plus élevées en sortie d'installation de filtration ont été observés à la suite de l'injection de la solution contenant de la protéase et de l'injection de la solution contenant de la lipase, ceci en association avec un saut de pH subséquent, il a pu être conclu que la nature des colmatages est essentiellement protéique et lipidique. Une solution adéquate comprenant des protéases et des lipases a pu être formulées pour pouvoir agir spécifiquement contre les particules réellement responsables du colmatage.

### Exemple 3

Afin de déterminer la nature de colmatages présents dans une installation de filtration par osmose inverse (volume de 3000L) de traitement de lait, le procédé suivant l'invention a été mis en oeuvre selon les étapes reprises dans le tableau ci-dessous :

| **Etape** | **Durée (min)** | **Produit injecté** | **Volume (L)** | **T° (°C)** | **pH après injection du produit** | **Débit en sortie (L/h)** |
|---|---|---|---|---|---|---|
| **Colmatages organiques** | | | | | | |
| Base détergente + | 20 | A6 | 3,2 | 47,2 | 6,8 | 18 |
| Lactase | 20 | R1 | 0,8 | 47,2 | 6,6 | 18 |
| Protéase | 20 | R2 | 0,8 | 47,2 | 6,6 | 18 |
| Lipase | 20 | R3 | 0,8 | 47,2 | 6,6 | 18 |
| Saut de pH | 10 | K2 | 1,5 | 47,2 | 9,9 | 26 |
| Rinçage | 10 | H₂O | n.a.* | 47,2 | 7 | 26 |

| **Colmatages biofilms** | | | | | | |
|---|---|---|---|---|---|---|
| Biorem | 45 | B | 4 | 47,2 | 7 | 26 |
| Rinçage | 10 | H₂O | n.a.* | 47,2 | 7 | 26 |

| **Colmatages métalliques** | | | | | | |
|---|---|---|---|---|---|---|
| Séquestrant + dispersant + K2 | 25 | A4 | 3,7 | 47,2 | 10,1 | 35 |

| | | | | | | |
|---|---|---|---|---|---|---|
| A6 = base détergente comprenant un agent séquestrant, un agent dispersant et un agent mouillant R1 = solution enzymatique aqueuse à base de lactase K2 = solution alcaline (soude caustique + potasse caustique selon un ratio 1:1) R2 = solution enzymatique aqueuse à base de protéase R3 = solution enzymatique aqueuse à base de lipase A4 = solution comprenant un agent séquestrant et un agent dispersant B = composition comprenant un composant détergent comprenant un agent séquestrant, un agent dispersant et un agent mouillant et un composant enzymatique comprenant une polysaccharidase, une laccase et une protéase n.a.* = non applicable : circulation à flux perdu en continu durant 10 min | | | | | | |

La mise en oeuvre du procédé suivant l'invention selon ce troisième exemple a permis de mettre en évidence que les colmatages de l'installation de filtration par osmose inverse sont essentiellement dus à la présence de particules présentant une affinité avec les lipases et les protéases mais aussi à cause de la présence d'ions métalliques. Comme on peut le constater de cet exemple, une première étape d'injection d'une solution détergente a été réalisée, ceci pour décrocher au moins partiellement les particules du filtre et les maintenir en suspension. En outre, un saut de pH a été réalisé suite aux injections successives des solutions enzymatiques à base de protéase et de lipase afin que ces enzymes se retrouvent dans un milieu présentant un pH favorable à leur activité enzymatique. Comme on peut le constater, l'injection d'une solution permettant de mettre en évidence la présence de colmatage dû à la présence de biofilm n'a pas permis d'observer un débit en sortie plus important, ce qui se traduit par une quasi absence de biofilm dans l'installation de filtration.

De cet essai, dès lors que des valeurs de débit plus élevées en sortie d'installation de filtration ont été observés à la suite de l'injection de la solution contenant de la lipase, de l'injection de la solution contenant de la protéase et de de l'injection de la solution comprenant un agent séquestrant et un agent dispersant, il a pu être conclu que la nature des colmatages est essentiellement lipidique et protéique mais aussi que le colmatage est dû à la présence d'ions métallique. Suite à cet audit, une solution adéquate comprenant des lipases, des protéases et des agents permettant de décrocher les ions métalliques ont pu être formulées pour pouvoir agir spécifiquement contre les particules réellement responsables du colmatage.

## Revendications

1. Trousse d'identification de la nature de colmatages présents dans une installation de filtration membranaire, ladite trousse comprenant des solutions distinctes agencées pour circuler dans ladite installation suite à des amenées distinctes desdites solutions, ladite trousse comprenant au moins :
- une première solution enzymatique comprenant au moins une protéase agencée pour être amenée et circuler dans ladite installation de filtration membranaire pendant une première période de temps prédéterminée ;
- une deuxième solution enzymatique comprenant au moins une enzyme autre qu'une protéase agencée pour être amenée et circuler dans ladite installation de filtration membranaire pendant une deuxième période de temps prédéterminée
- une composition comprenant au moins un composant détergent et au moins un composant enzymatique, ledit composant enzymatique comprenant au moins une laccase et/ou au moins une polysaccharidase et/ou au moins une protéase et ledit composant détergent comprenant au moins un composé séquestrant, un composé dispersant et un composé mouillant,
ladite trousse permettant une identification en place de la nature des colmatages des filtres de ladite installation de filtration membranaire.

2. Trousse d'identification de la nature de colmatages selon la revendication 1, laquelle comprend une solution détergente comprenant au moins un agent séquestrant et/ou au moins un agent dispersant et/ou au moins un agent mouillant.

3. Trousse d'identification de la nature de colmatages selon la revendication 1 ou 2, laquelle comprend une composition additionnelle comprenant un agent séquestrant et/ou un agent dispersant.

4. Trousse d'identification de la nature de colmatages présents dans une installation de filtration membranaire selon l'une des revendications 1 à 3, **caractérisée en ce que** ladite au moins une enzyme autre qu'une protéase est choisie dans le groupe constitué des α-polysaccharidases (lactase, amylase, alpha-glucosidase,), des β-polysaccharidases (β-N-acétylglucosaminidase, cellulose, hémi-cellulose, β-glucanase, arabanase, pectinase, chitinase, xylanase, dextranase, lysozyme, pullulanase, β-glucisidase, mannanase,), des oxydo-réductases laccase), des lyoses (pectate lyose), des transférases, des lipases et des estérases (lysophospholipase, phospholipase,), et de leurs mélanges.

5. Trousse d'identification de la nature de colmatages présents dans une installation de filtration membranaire selon l'une des revendications 1 à 5, **caractérisée en ce qu'**elle comprend en outre une troisième solution enzymatique comprenant au moins une enzyme choisie dans le groupe constitué des α-polysaccharidases (lactase, amylase, alpha-glucosidase,), des β-polysaccharidases (β-N-acétylglucosaminidase, cellulose, hémi-cellulose, β-glucanase, arabanase, pectinase, chitinase, xylanase, dextranase, lysozyme, pullulanase, β-glucisidase, mannanase), des oxydo-réductases (laccase), des lyoses (pectate lyase), des transférases, des protéases et des peptidases (métallo-protéase, sérine-protéases, exo-peptidase, endo-protéase, cystine-protéase), des lipases et des estérases (lysophospholipase, phospolipase) et de leurs mélanges.

## Patentansprüche

1. Beutel zur Identifizierung der Art von Verstopfungen, die in einer Membranfilteranlage vorhanden sind, wobei der Beutel unterschiedliche Lösungen umfasst, die eingerichtet sind, um im Anschluss an unterschiedliche Zufuhren der Lösungen in der Anlage zu zirkulieren, wobei der Beutel mindestens Folgendes umfasst:
- eine erste enzymatische Lösung, umfassend mindestens eine Protease, die eingerichtet sind, um während einer ersten vorbestimmten Zeitdauer in die Membranfilteranlage zugeführt zu werden und zu zirkulieren;
- eine zweite enzymatische Lösung, umfassend mindestens ein anderes Enzym als eine Protease, die eingerichtet sind, um während einer zweiten vorbestimmten Zeitdauer in die Membranfilteranlage zugeführt zu werden und zirkulieren;
- eine Zusammensetzung, umfassend mindestens einen reinigenden Inhaltsstoff und mindestens einen enzymatischen Inhaltsstoff, wobei der enzymatische Inhaltsstoff mindestens eine Laccase und/oder mindestens eine Polysaccharidase und/oder mindestens eine Protease umfasst und der reinigende Inhaltsstoff mindestens eine sequestrierende Verbindung, eine dispergierende Verbindung und eine benetzende Verbindung umfasst,
wobei der Beutel eine Identifizierung der Art von Verstopfungen der Filter der Membranfilteranlage vor Ort erlaubt.

2. Beutel zur Identifizierung der Art von Verstopfungen nach Anspruch 1, der eine reinigende Lösung umfasst, die mindestens ein sequestrierendes Mittel und/oder mindestens ein Dispergiermittel und/oder mindestens ein Feuchtmittel umfasst.

3. Beutel zur Identifizierung der Art von Verstopfungen nach Anspruch 1 oder 2, der eine zusätzliche Zusammensetzung umfasst, die ein sequestrierendes Mittel und/oder ein Dispergiermittel umfasst.

4. Beutel zur Identifizierung der Art von Verstopfungen, die in einer Membranfilteranlage vorhanden sind, nach einem der Ansprüche 1 bis 3, **dadurch gekennzeichnet, dass** das mindestens eine andere Enzym als eine Protease aus der Gruppe ausgewählt ist, die aus α-Polysaccharidasen (Lactase, Amylase, Alpha-Glucosidase, ...), β-Polysaccharidasen (β-N-Acetylglucosaminidase, Cellulase, Hemicellulase, β-Glucanase, Arabanase, Pektinase, Chitinase, Xylanase, Dextranase, Lysozym, Pullulanase, β-Glucisidase, Mannanase, ...), Oxydoreduktasen (Laccase, ...), Lyasen (Pektatlyase, ...), Transferasen, Lipasen und Esterasen (Lysophospholipase, Phospholipase, ...) und deren Gemischen besteht.

5. Beutel zur Identifizierung der Art von Verstopfungen, die in einer Membranfilteranlage vorhanden sind, nach einem der Ansprüche 1 bis 5, **dadurch gekennzeichnet, dass** er weiter eine dritte enzymatische Lösung umfasst, die mindestens ein Enzym umfasst, das aus der Gruppe ausgewählt ist, die aus α-Polysaccharidasen (Lactase, Amylase, alpha-Glucosidase, ...), β-Polysaccharidasen (β-N-Acetylglucosaminidase, Cellulase, Hemicellulase, β-Glucanase, Arabanase, Pektinase, Chitinase, Xylanase, Dextranase, Lysozym, Pullulanase, β-Glucisidase, Mannanase, ...), Oxydoreduktasen (Laccase, ...), Lyasen (Pektatlyase, ...), Transferasen, Proteasen und Peptidasen (Metalloprotease, Serinproteasen, Exopeptidase, Endoprotease, Cysteinprotease, ...), Lipasen und Esterasen (Lysophospholipase, Phospholipase, ...) und deren Gemischen besteht.

## Claims

1. Kit for identifying the nature of clogs present in a membrane filtration plant, said kit comprising separate solutions arranged to flow through said plant following separate supplies of said solutions, said kit comprising at least:
- a first enzyme solution comprising at least one protease arranged to be supplied and to flow through said membrane filtration plant for a first predetermined time period;
- a second enzyme solution comprising at least one enzyme other than a protease arranged to be supplied and to flow through said membrane filtration plant for a second predetermined time period;
- a composition comprising at least one detergent component and at least one enzyme component, said enzyme component comprising at least one laccase and/or at least one polysaccharidase and/or at least one protease and said detergent component comprising at least one sequestering compound, one dispersing compound and one wetting compound,
said kit allowing in situ identification of the nature of the filter clogs of said membrane filtration plant.

2. Kit for identifying the nature of clogs according to claim 1, which comprises a detergent solution comprising at least one sequestering agent and/or at least one dispersing agent and/or at least one wetting agent.

3. Kit for identifying the nature of clogs according to claim 1 or 2, which comprises an additional composition comprising a sequestering agent and/or a dispersing agent.

4. Kit for identifying the nature of clogs present in a membrane filtration plant according to one of claims 1 to 3, **characterised in that** said at least one enzyme other than a protease is selected from the group consisting of α-polysaccharidases (lactase, amylase, alpha-glucosidase, etc.), β-polysaccharidases (β-N-acetylglucosaminidase, cellulase, hemi-cellulase, β-glucanase, arabanase, pectinase, chitinase, xylanase, dextranase, lysozyme, pullulanase, β-glucisidase, mannanase, etc.) oxidoreductases (laccase, etc.), lyases (pectate lyase, etc.), transferases, lipases and esterases (lysophospholipase, phospholipase, etc.) and mixtures thereof.

5. Kit for identifying the nature of clogs present in a membrane filtration plant according to one of claims 1 to 5, **characterised in that** it further comprises a third enzyme solution comprising at least one enzyme selected from the group consisting of α-polysaccharidases (lactase, amylase, alpha-glucosidase, etc.), β-polysaccharidases (β-N-acetylglucosaminidase, cellulase, hemi-cellulase, β-glucanase, arabanase, pectinase, chitinase, xylanase, dextranase, lysozyme, pullulanase, β-glucisidase, mannanase, etc.) oxidoreductases (laccase, etc.), lyases (pectate lyase, etc.), transferases, proteases and peptidases (metalloprotease, serine proteases, exopeptidase, endoprotease, cysteine proteases, etc.), lipases and esterases (lysophospholipase, phospholipase, etc.) and mixtures thereof.
